# EUROPEAN PATENT SPECIFICATION

(11) **EP 2 632 995 B1**
(45) Date of publication and mention of the grant of the patent: **12.12.2018**
(21) Application number: 11835860.5
(22) Date of filing: 28.10.2011
(51) Int. Cl.: F16D 69/02

(54) **FRICTION MATERIAL**
REIBUNGSMATERIAL
MATÉRIAU DE FROTTEMENT

(30) Priority: 03.10.2011 JP 2011219247; 29.10.2010 JP 2010243106
(43) Date of publication of application: 04.09.2013
(73) Proprietor: Nisshinbo Brake Inc., Chuo-ku Tokyo 103-8650 (JP)
(72) Inventor: KIMURA, Eiji, Oura-gun Gunma 370-0614 (JP); TAKEUCHI, Kazuhiro, Oura-gun Gunma 370-0614 (JP)
(74) Representative: Isarpatent
(86) International application number: PCT/JP2011/006051
(87) International publication number: WO 2012/056716

(56) References cited:
- JP-A- 9 291 271
- JP-A- H1 161 104
- JP-A- 11 061 104
- JP-A- 11 269 279
- JP-A- 62 104 889
- JP-A- 2001 020 986
- JP-A- 2005 336 340
- US-A1- 2002 086 132
- US-A1- 2006 223 907

## Description

### [TECHNICAL FIELD]

This invention relates to a friction material for automotive disc brake and drum brake, more particularly to a friction material mainly made from combinations of a fiber base material, binder, abrasive material and friction modifier.

### [BACKGROUND ART]

Disc brakes and drum brakes are conventionally used as automotive brake devices. Disc brakes and drum brakes include the frictional members such as disc brake pad and drum brake shoe that are friction materials affixed on metal base members. Then, a friction material needs to have high heat resistance and low brake noise generation possibility.

In order to inhibit the brake noise occurrence, improving a vibration absorption performance is found to be effective, and it is a known technology to add synthetic rubber particles in the friction material.

The Japanese Patent Application Publication No. 1999-61104 (Patent Literature 1 or PTL 1) describes the friction material that inhibits the brake noise occurrence by increasing the heat resistance as adding relatively high heat resistant silicone rubber particles for the synthetic rubber functioning as the friction modifier.

However, the silicone rubber particles involved in the friction material tend to fall off and be dislocated from a friction surface of the friction material due to a friction impact as a result of braking action, and therefore the friction material wear accelerates from the silicone rubber particle fall off and dislocation, which shorten the life span of the friction material.

As a preventive measure of fall off and dislocation of the silicone rubber particle from the friction surface of the friction material, the silicone rubber particle surface can be coated with a silane coupling agent so as to improve an adhesive property between the silicone rubber particle surface and a thermosetting resin as a binder.

In general, a person in the field of technology uses the silane coupling agent to coat the surface of the fiber base, the abrasive material, and the friction modifier in order to improve the adhesive property of the fiber base, the abrasive material, and the friction modifier with the thermosetting resin as a binder, which is disclosed in the Japanese Patent Application Publication No. 1997-291271 (Patent Literature 2 or PTL 2) and the Japanese Patent Application Publication No. 2001-20986 (Patent Literature 3 or PTL 3).

Yet, a relatively soft material such as the silicone rubber particles cannot obtain the desirable adhesive property with the thermosetting resin simply by coating the surface thereof with the silane coupling agent, resulting in the failure to obtain the desirable wear resistance. This problem is considered to reside in the manufacturing process of the friction material.

Normally, the friction material is manufactured through a mixing process of adding the measured each raw material in a mixer and stirring and mixing the raw material under the dry condition. In this mixing process, each material is stirred in the mixer; however, the silane coupling agent coated material surface wears because of the friction between the raw materials, which significantly reduces the effectiveness of the silane coupling agent.

US Patent Publication No. 2002/086132 A1 (PTL 4) shows "the silane coupling agent (aminosilane) that is made a compound having a silanol group and an amino group in the same molecule by hydrolysis, the consideration polymerization of silanol group is inhibited because of bipolar ionic structure in a molecule by the amino group and becomes relatively stable solution. The hydrophilic compound having a low molecular weight fully permeates the capillary space of the paper base material, thereafter, the condensation polymerization reaction of the silanol group is repeated by the evaporation of a solvent and heating, a siloxane bond is formed and is hardened, and both organic and inorganic components of the paper base material are firmly boned and physical strength exceeding that of phenol resin is acquired." The hydrophilic compound permeates the capillary space of the paper-based material and is afterwards cured to form the silicone resin. The sape of the silicone resin is in a range of the capillary space of the paper-based material.

### [Patent Literature]

[PTL 1] Japanese Patent Application Publication No. 1999-61104
[PTL 2] Japanese Patent Application Publication No. 1997-291271
[PTL 3] Japanese Patent Application Publication No. 2001-20986
[PLT 4] US Patent Application Publication No. 2002/086132 A1

### [SUMMARY]

The present invention provides a friction material according to claim 1. The dependent claims and the subsequent description disclose particularly advantageous embodiments and features of the invention.

An object of this invention is to provide a friction material having the fiber base material, binder, abrasive material and friction modifier which have desirable wear resistance for the friction material including the silicone rubber particles as the friction modifier by inhibiting the silicone rubber particle from fall off and dislocation from the friction surface of the friction material due to the friction impact of the braking action.

The inventor of this invention confirmed that by kneading the silicone rubber compound and the silane coupling agent together in the silicone rubber particle manufacturing process, the silane coupling agent is dispersed inside the silicone rubber particles, and then the effectiveness of the silane coupling agent can be maintained regardless of the wear of the surface of the silicone rubber particle in the mixing process.

Also, in order to inhibit fall off and dislocation of the silicone rubber particles from the friction surface of the friction material due to the friction impact of the braking action, it is preferable to apply suitable amount of rigid inorganic particles having appropriate Mohs' hardness and a particle size between the silicone rubber particle and matrix resin.

This invention was made to improve the existing problems of the conventional arts and is based on the later described technology in regards to the friction material that includes particular silicone rubber particles and further include particular rigid inorganic particles.

In the present friction material, by utilizing the silicone rubber particles dispersing the silane coupling agent inside of silicone rubber particles as the friction modifier, fall off and dislocation of the silicone rubber particles due to the frictional impact at braking action can be inhibited, thereby offering the friction material with excellent wear resistance.

### [BRIEF DESCRIPTION OF DRAWINGS]

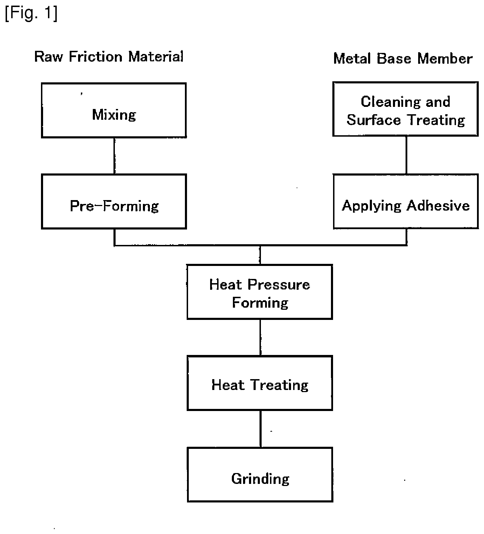

FIG. 1 is a view illustrating an example of manufacturing the disc brake pad utilizing the friction material of the present invention; and

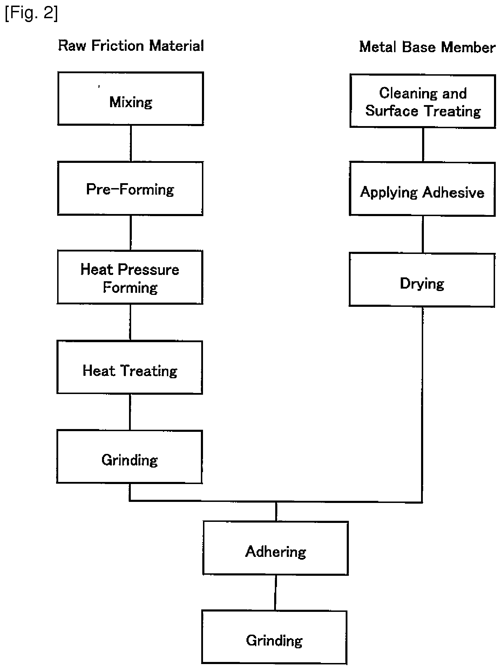

FIG. 2 is a view illustrating an example of manufacturing the drum brake shoe utilizing the friction material of the present invention.

### [DESCRIPTION OF EMBODIMENTS]

In the friction material including the silicone rubber particles as the friction modifier, the silane coupling agent dispersed silicone rubber particles is utilized as the silicone rubber particle. The silane coupling agent dispersed silicone rubber particles are made by adding the silane coupling agent and curing agent in the silicone compound to stir the same.

Because the silane coupling agent is dispersed inside of the silicone rubber particles, the effectiveness of the silane coupling agent can be maintained regardless of the silicone rubber particle surface wear in the mixing process, thereby obtaining sufficient adhesive property between the silicone rubber particles and the thermosetting resin and inhibiting fall off and dislocation of the silicone rubber particles due to the friction impact at the braking action.

The silane coupling agent to be included in the silane coupling agent dispersed silicone rubber particles is preferably between 0.1 weight % and 5 weight % relative to the entire silane coupling agent dispersed silicone rubber particles and more preferably between 0.5 volume % and 3 volume %.

If the silane coupling agent included in the silicone rubber particles is less than 0.1 weight % relative to the entire silane coupling agent dispersed silicone rubber particles, no sufficient adhesive property between the silicone rubber particles and the resin matrix can be obtained and the required wear resistance cannot be satisfied. Regarding the maximum volume % of the silane coupling agent relative to the entire silane coupling agent dispersed silicone rubber particles that needs to be included in the silicone rubber particles, no significant effect can be seen in the silicone rubber particles with more than 5 weight % of the silane coupling agent, and more silane coupling agent increases the cost of the silane coupling agent dispersed silicone rubber particles, so that the silane coupling agent is preferably be 5 or lower volume % relative to the entire silane coupling agent dispersed silicone rubber particles.

The silicone rubber compound is a rubber compound having the unvulcanized silicone rubber and high grade silica as the main components, and the silane coupling agent dispersed silicone rubber particles to be used in the friction material of the present invention are manufactured by adding the silane coupling agent and the curing agent such as organic peroxide curing agent and curing the same to heat cure and to make in a particle form.

A method for making the silicone rubber particles can be such as a crushing method, spray-drying method, coagulation method, and powder drying method.

Silane coupling agent of the present invention can be generally used silane coupling agent such as epoxy based silane coupling agent, amino based silane coupling agent, and isocyanate based silane coupling agent. When phenol based resin is used as the binder, amino based silane coupling agent is preferable.

The volume of the silane coupling agent dispersed silicone rubber particles included in the friction material is preferably between 0.5 volume % and 20 volume % relative to the entire friction material volume, more preferably between 3 volume % and 5 volume % relative to the entire friction material volume.

If the volume of the silane coupling agent dispersed silicone rubber particles included in the friction material is less than 0.5 volume % relative to the entire friction material volume, reduction of the vibration by using the silicone rubber particles cannot be expected, thereby creating more possibility of generating the brake noise. In addition, if the volume of the silane coupling agent dispersed silicone rubber particles included in the friction material exceeds 20 volume % relative to the entire friction material volume, the wear resistance reduces.

The average particle diameter of the silane coupling agent dispersed silicone rubber particles is between 10µm and 1,000µm, more preferably between 400µm and 600µm.

If the average particle diameter of the silane coupling agent dispersed silicone rubber particles is less than 10µm, reduction of the vibration by using the silicone rubber particles cannot be expected, thereby creating more possibility of generating brake noise.
Also, if the average particle diameter of the silane coupling agent dispersed silicone rubber particles exceeds 1,000µm, the wear resistance reduces. Here, the average particle diameter of the present invention is 50 % particle diameter measured by a Laser Diffraction-type Particle Size Distribution Measuring Method.

Furthermore, rigid inorganic particles will be added in the friction material in the present invention. When the rigid inorganic particles exist between the silane coupling agent dispersed silicone rubber particles and the thermosetting resin, the rigid inorganic particles function as wedges and enable to inhibit fall off and dislocation of the silane coupling agent dispersed silicone rubber particles.

The Mohs' hardness of the rigid inorganic particles is preferably between 5 and 9, and the average particle diameter of the rigid inorganic particles is preferably between 1µm and 15µm, where the wear resistance of the friction material improves when adding between 0.1 and 20 volume % of the rigid inorganic particles relative to the entire friction material volume.

Rigid inorganic particles with Mohs' hardness between 5 and 9 may be magnesia, zirconium silicate, silica, alumina, and silicon carbide; however, rigid inorganic particles can be other rigid inorganic particles having Mohs' hardness of between 5 and 9 typically added to the friction material. Also, Mohs' hardness used in the present invention is an original Mohs' hardness representing (1) talc, (2) gypsum, (3) calcite, (4) fluorite, (5) apatite, (6) orthoclase, (7) quartz, (8) topaz, (9) corundum, (10) diamond.

Also, the friction material of the present invention include not only the above-described silane coupling agent dispersed silicone rubber particles and the rigid inorganic particles, but also fiber base materials such as a metallic fiber, an organic fiber, and an inorganic fiber, binders such as the thermosetting resin, and friction modifiers such as an organic filler, an inorganic filler, a lubricant, and a metal particle, which are typically used in the friction material.

The fiber base materials of the present invention can be metal fibers such as an iron fiber, a steel fiber, a copper fiber, a brass fiber, and a bronze fiber, organic fibers such as an aramid fiber, an acrylic fiber, and an inorganic fiber such as a ceramic fiber, a rockwool fiber, and potassium titanate fiber. Any single or combination of the fiber base materials may be used herein. The volume of the fiber base materials involved in the friction material is preferably between 5 volume % and 60 volume % relative to the entire friction material volume in order to secure the mechanical strength, more preferably between 10 volume % and 50 volume %.

The binder of the present invention can be the thermosetting resin such as a phenol resin and an epoxy resin, a resin of the thermosetting resin modified with cashew oil, silicone oil, or various elastomers, and a resin of the thermosetting in which such as the various elastomer and fluorine polymer dispersed. The binder may be a single or combinations of any of the above materials.

The volume of the included binder is preferably between 7 volume % and 30 volume % relative to the entire friction material volume in order to secure the mechanical strength and the abrasive resistance, and more preferably between 9 volume % and 20 volume % relative to the entire friction material volume.

The friction modifier other than the silane coupling agent dispersed silicone rubber particles can be organic fillers such as cashew dusts, rubber dusts (tire tread rubber pulverized powder), various unvulcanized rubber particles other than silicone rubber, and various vulcanized rubber particles other than silicone rubber, an inorganic filler such as a barium sulphate, calcium carbonate, calcium hydroxide, vermiculite, and mica, lubricants such as molybdenum disulfide, stannic sulfide, zinc sulfide, and iron sulfide, and metal particles such as copper particles, brass particles, and aluminum particles. The friction modifier can be single or any combination of the above materials.

The volume of the friction modifier, in consideration of the desirable friction characteristics, is preferably between 40 volume % and 70 volume % relative to the entire friction material, and more preferably 50 volume % and 70 volume %.

The friction material of the present invention is manufactured through a step of uniformly mixing a predetermined amount of the above-explained silane coupling agent dispersed silicone rubber particles, the rigid inorganic particles, the fiber base, the binder, and the friction modifier with a mixer such as a Loedige Mixer or an Eirich Mixer, a step of pre-forming, such as placing the obtained raw mixture in a pre-forming die, a step of heat-pressure-forming such as placing the pre-formed product in a heat forming die to process at the forming temperature of 130-180°C, forming pressure of 15-49MPa, for 3-10 minutes, a step of heat treating (post curing) the obtained formed part at 140-250°C for 2-12 hours, a step of grinding the friction surface, and if necessary and appropriate, the steps of coating, baking, and scorching.

When manufacturing the brake pads at the heat pressure forming step, a metal back plate that was already cleaned, surface treated, and had an adhesive applied thereon, is superposed on the above-stated pre-formed part to form the brake pad.

### [Embodiment]

In the following sections, embodiments and comparative examples are suggested, and the present invention is concretely explained; however, the present invention is not limited to the descriptions below.

Method for manufacturing silane coupling agent dispersed silicone rubber particles 1-7 After kneading the silicone rubber compound and amino based silane coupling agent shown in Table 1 by a kneader and adding the organic peroxide based vulcanized agent to further knead the resulted mixture, the resulted further kneaded mixture is extruded into a thin sheet silicone rubber based compound, and the sheet silicone rubber based compound is heated at between 150 °C and 250°C to cure the same. Then, the cured sheet silicone rubber based compound is pulverized by a jet mill and classified to produce the silane coupling agent dispersed silicone rubber particles 1-7.

Method for manufacturing the silane coupling agent coated silicone rubber particle 8 After adding the organic peroxide vulcanizing agent in the silicone rubber compound as shown in Table 1 to knead this mixture, the mixture is extruded into a thin sheet silicone rubber based compound, and the sheet silicone rubber based compound is heated at between 150°C and 250 °C to cure the same. Then, the cured sheet silicone rubber based compound is pulverized by a jet mill and classified to produce the silicone rubber particles. The obtained silicone particles and amino based silane coupling agent is filled in an agitator to agitate to affix the amino based silane coupling agent on the surface of the silicone rubber particles, thereby producing the silane coupling agent coated silicone particle 8.

Method for manufacturing the friction materials in the embodiments 1-19 and comparative example 1
The raw material composition for the friction material, as shown in Tables 2-4(Embodiments and Comparative Examples), is mixed for about 10 minutes by a Loedige Mixer, and the resultant mixture is placed in the pre-forming die to be pre-formed by pressurizing at 35MPa for 1 minute.

**[Table 1]**

| | | Silicone Rubber Particles | | | | | | | |
|---|---|---|---|---|---|---|---|---|---|
| | | 1 | 2 | 3 | 4 | 5 | 6 | 7 | 8 |
| Silane Coupling Agent Treatment Method | | Rubber Compound Kneading | | | | | | | Coating on Rubber Particle Surface |
| Composition (Weight %) | Silicone Rubber Compound | 99.95 | 99.9 | 97 | 97 | 97 | 97 | 97 | 97 |
| | Amino Based Silane Coupling Agent | 0.05 | 0.1 | 3 | 3 | 3 | 3 | 3 | 3 |
| | Total | 100 | 100 | 100 | 100 | 100 | 100 | 100 | 100 |
| Average Particle Diameter (µm) | | 500 | 500 | 5 | 10 | 500 | 1,000 | 1,200 | 500 |

**[Table 2]**

| | | Embodiments ^{*)} Embodiments 3 and 7 are not falling under the claimed invention | | | | | | |
|---|---|---|---|---|---|---|---|---|
| | | 1 | 2 | 3^{*)} | 4 | 5 | 6 | 7^{*)} |
| Fiber Base | Steel Fiber | 11 | 11 | 11 | 11 | 11 | 11 | 11 |
| | Aramid Pulp | 2 | 2 | 2 | 2 | 2 | 2 | 2 |
| Binder | Phenolic Resin | 9 | 9 | 9 | 9 | 9 | 9 | 9 |
| Organic Friction Modifier | Silicone Rubber Particle 1 (Silane Coupling Agent 0.05 weight % kneading) average particle diameter of 500µm | 10 | | | | | | |
| | Silicone Rubber Particle 2 (Silane Coupling Agent 0.1 weight % kneading) average particle diameter of 500µm | | 10 | | | | | |
| | Silicone Rubber Particle 3 (Silane Coupling Agent 3 weight % kneading) average particle diameter of 5µm | | | 10 | | | | |
| | Silicone Rubber Particle 4 (Silane Coupling Agent 3 weight % kneading) average particle diameter of 10µm | | | | 10 | | | |
| | Silicone Rubber Particle 5 (Silane Coupling Agent 3 weight % kneading) average particle diameter of 500µm | | | | | 10 | | |
| | Silicone Rubber Particle 6 (Silane Coupling Agent 3 weight % kneading) average particle diameter of 1000µm | | | | | | 10 | |
| | Silicone Rubber Particle 7 (Silane Coupling Agent 3 weight % kneading) average particle diameter of 1200µm | | | | | | | 10 |
| | Silicone Rubber Particle 8 (Silane Coupling Agent 3 weight % coating) average particle diameter of 500µm | | | | | | | |
| Inorganic Friction Modifier | Zirconium silicate (Mohs' hardness 7.5) average particle diameter of 0.5µm | | | | | | | |
| | Zirconium silicate (Mohs' hardness 7.5) average particle diameter of 1µm | | | | | | | |
| | Zirconium silicate (Mohs' hardness 7.5) average particle diameter of 7µm | 8 | 8 | 8 | 8 | 8 | 8 | 8 |
| | Zirconium silicate (Mohs' hardness 7.5) average particle diameter of 15µm | | | | | | | |
| | Zirconium silicate (Mohs' hardness 7.5) average particle diameter of 20µm | | | | | | | |
| | Petroleum Coke | 25 | 25 | 25 | 25 | 25 | 25 | 25 |
| | Mica | 3 | 3 | 3 | 3 | 3 | 3 | 3 |
| | Calcium Carbonate | 2 | 2 | 2 | 2 | 2 | 2 | 2 |
| | Barium Sulphate | 24 | 24 | 24 | 24 | 24 | 24 | 24 |
| | Iron Sulfide | 2 | 2 | 2 | 2 | 2 | 2 | 2 |
| | Calcium Hydroxide | 2 | 2 | 2 | 2 | 2 | 2 | 2 |
| | Potassium Hexa-Titanate Flake | 2 | 2 | 2 | 2 | 2 | 2 | 2 |
| Total | | 100 | 100 | 100 | 100 | 100 | 100 | 100 |
| Evaluation Result | Wear Resistance | Δ | ○ | ⊚ | ⊚ | ⊚ | ○ | Δ |
| | Brake Noise | ⊚ | ⊚ | Δ | ○ | ⊚ | ⊚ | ⊚ |

**[Table 3]**

| | | Embodiments | | | | | | |
|---|---|---|---|---|---|---|---|---|
| | | 8 | 9 | 10 | 11 | 12 | 13 | 14 |
| Fiber Base | Steel Fiber | 11 | 11 | 11 | 11 | 11 | 11 | 11 |
| | Aramid Pulp | 2 | 2 | 2 | 2 | 2 | 2 | 2 |
| Binder | Phenolic Resin | 9 | 9 | 9 | 9 | 9 | 9 | 9 |
| Organic Friction Modifier | Silicone Rubber Particle 1 (Silane Coupling Agent 0.05 weight % kneading) average particle diameter of 500µm | | | | | | | |
| | Silicone Rubber Particle 2 (Silane Coupling Agent 0.1 weight % kneading) average particle diameter of 500µm | | | | | | | |
| | Silicone Rubber Particle 3 (Silane Coupling Agent 3 weight % kneading) average particle diameter of 5µm | | | | | | | |
| | Silicone Rubber Particle 4 (Silane Coupling Agent 3 weight % kneading) average particle diameter of 10µm | | | | | | | |
| | Silicone Rubber Particle 5 (Silane Coupling Agent 3 weight % kneading) average particle diameter of 500µm | 0.2 | 0.5 | 20 | 25 | 10 | 10 | 10 |
| | Silicone Rubber Particle 6 (Silane Coupling Agent 3 weight % kneading) average particle diameter of 1000µm | | | | | | | |
| | Silicone Rubber Particle 7 (Silane Coupling Agent 3 weight % kneading) average particle diameter of 1200µm | | | | | | | |
| | Silicone Rubber Particle 8 (Silane Coupling Agent 3 weight % coating) average particle diameter of 500µm | | | | | | | |
| Inorganic Friction Modifier | Zirconium silicate (Mohs' hardness 7.5) average particle diameter of 0.5µm | | | | | 8 | | |
| | Zirconium silicate (Mohs' hardness 7.5) average particle diameter of 1µm | | | | | | 8 | |
| | Zirconium silicate (Mohs' hardness 7.5) average particle diameter of 7µm | 8 | 8 | 8 | 8 | | | |
| | Zirconium silicate (Mohs' hardness 7.5) average particle diameter of 15µm | | | | | | | 8 |
| | Zirconium silicate (Mohs' hardness 7.5) average particle diameter of 20µm | | | | | | | |
| | Petroleum Coke | 25 | 25 | 25 | 25 | 25 | 25 | 25 |
| | Mica | 3 | 3 | 3 | 3 | 3 | 3 | 3 |
| | Calcium Carbonate | 2 | 2 | 2 | 2 | 2 | 2 | 2 |
| | Barium Sulphate | 33.8 | 33.5 | 14 | 9 | 24 | 24 | 24 |
| | Iron Sulfide | 2 | 2 | 2 | 2 | 2 | 2 | 2 |
| | Calcium Hydroxide | 2 | 2 | 2 | 2 | 2 | 2 | 2 |
| | Potassium Hexa-Titanate Flake | 2 | 2 | 2 | 2 | 2 | 2 | 2 |
| Total | | 100 | 100 | 100 | 100 | 100 | 100 | 100 |
| Evaluation Result | Wear Resistance | ⊚ | ⊚ | ○ | Δ | Δ | ○ | ○ |
| | Brake Noise | Δ | ○ | ⊚ | ⊚ | ⊚ | ⊚ | ⊚ |

**[Table 4]**

| | | Embodiments | | | | | Comparative Examples |
|---|---|---|---|---|---|---|---|
| | | 15 | 16 | 17 | 18 | 19 | 1 |
| Fiber Base | Steel Fiber | 11 | 11 | 11 | 11 | 11 | 11 |
| | Aramid Pulp | 2 | 2 | 2 | 2 | 2 | 2 |
| Binder | Phenolic Resin | 9 | 9 | 9 | 9 | 9 | 9 |
| Organic Friction Modifier | Silicone Rubber Particle 1 (Silane Coupling Agent 0.05 weight % kneading) average particle diameter of 500µm | | | | | | |
| | Silicone Rubber Particle 2 (Silane Coupling Agent 0.1 weight % kneading) average particle diameter of 500µm | | | | | | |
| | Silicone Rubber Particle 3 (Silane Coupling Agent 3 weight % kneading) average particle diameter of 5µm | | | | | | |
| | Silicone Rubber Particle 4 (Silane Coupling Agent 3 weight % kneading) average particle diameter of 10µm | | | | | | |
| | Silicone Rubber Particle 5 (Silane Coupling Agent 3 weight % kneading) average particle diameter of 500µm | 10 | 10 | 10 | 10 | 10 | |
| | Silicone Rubber Particle 6 (Silane Coupling Agent 3 weight % kneading) average particle diameter of 1000µm | | | | | | |
| | Silicone Rubber Particle 7 (Silane Coupling Agent 3 weight % kneading) average particle diameter of 1200µm | | | | | | |
| | Silicone Rubber Particle 8 (Silane Coupling Agent 3 weight % coating) average particle diameter of 500µm | | | | | | 10 |
| Inorganic Friction Modifier | Zirconium silicate (Mohs' hardness 7.5) average particle diameter of 0.5µm | | | | | | |
| | Zirconium silicate (Mohs' hardness 7.5) average particle diameter of 1µm | | | | | | |
| | Zirconium silicate (Mohs' hardness 7.5) average particle diameter of 7µm | | 0.05 | 0.1 | 20 | 25 | 8 |
| | Zirconium silicate (Mohs' hardness 7.5) average particle diameter of 15µm | | | | | | |
| | Zirconium silicate (Mohs' hardness 7.5) average particle diameter of 20µm | 8 | | | | | |
| | Petroleum Coke | 25 | 25 | 25 | 25 | 25 | 25 |
| | Mica | 3 | 3 | 3 | 3 | 3 | 3 |
| | Calcium Carbonate | 2 | 2 | 2 | 2 | 2 | 2 |
| | Barium Sulphate | 24 | 31.95 | 31.9 | 12 | 7 | 24 |
| | Iron Sulfide | 2 | 2 | 2 | 2 | 2 | 2 |
| | Calcium Hydroxide | 2 | 2 | 2 | 2 | 2 | 2 |
| | Potassium Hexa-Titanate Flake | 2 | 2 | 2 | 2 | 2 | 2 |
| Total | | 100 | 100 | 100 | 100 | 100 | 100 |
| Evaluation Result | Wear Resistance | Δ | Δ | ○ | ○ | Δ | × |
| | Brake Noise | ⊚ | ⊚ | ⊚ | ⊚ | ⊚ | ⊚ |

This pre-formed product and the iron back plate, which is pre-cleaned, surface treated, and has adhesive applied thereon, are superposed to be placed in a heat-forming metal die to be heated at the forming temperature of 155°C and pressurized at the forming pressure of 40MPa for 5 minutes, heat-treated (post cured) in a heat treatment chamber at 200°C for 4 hours, coated, baked, and grinded to form the brake pad for automobiles in the Embodiments and the Comparative Examples.

Evaluation is conducted for the disc brake pad of the embodiments and the comparative examples. The evaluation method and evaluation standard are shown in Tables.

### Wear resistance

The passenger vehicle brake pad in the embodiments 1-19 and comparative example 1 is set on a dynamo meter to test the brake pad according to the General Wear Test (pre-braking temperature of 200°C) of Chassis And Brake - Brake Lining And Disc Brake Pad - Wear Test Procedure On Dynamometer (JASO C427-88) in order to measure the amount of brake pad wear.
Used Caliper Brake Type: Floating Type Caliper
Inertia: 7.0kg • m²

Evaluation Standard is as follows:
⊚: less than 0.15mm
○: 0.15mm or more, less than 0.20mm
Δ: 0.20mm or more, less than 0.25mm
×: 0.25mm or more

### [Brake Noise]

The passenger vehicle brake pad was installed in the actual vehicle, and the brake noise test was conducted under Passenger Cars - Service Brake Road Test Procedures (JASO C402) to determine the brake noise generation ratio.

The evaluation standard is as follows:
⊚: 0%
○: over 0%, less than 5%
Δ: 5% or more, less than 10%
×: 10% or more

The present invention can inhibit fall off and dislocation of the silicone rubber particles from the friction surface of friction material due to the friction impact of the braking action, obtain the friction material showing effective wear resistance, which becomes a significantly and practically effective friction material to be used for a disc brake or a drum brake as a braking device of an automotive.

## Claims

1. A friction material comprising
a fiber base material,
a binder,
an abrasive material, and
a friction modifier, **characterized in that**
the friction modifier includes silicone rubber particles wherein a silane coupling agent is dispersed inside of the silicone rubber particles,
and wherein the average particle diameter of the silicone rubber particles is between 10 micrometers and 1000 micrometers.

2. The friction material according to Claim 1, wherein
the silicone rubber particles include between 0.1 weight % and 5 weight % of the silane coupling agent relative to the entire silicone rubber particles.

3. The friction material according to Claims 1 or 2, wherein
the friction material include between 0.5 volume % and 20 volume % of the silicone rubber particles relative to the entire friction material.

4. The friction material according to any one of Claims 1-3, wherein
the friction material includes as the abrasive material rigid inorganic particles in an amount of between 0.1 volume % and 20 volume % relative to the entire friction material, wherein the rigid inorganic particles have a Mohs' hardness between 5-9 and an average particle diameter of 1-15 micrometers.

## Patentansprüche

1. Reibungsmaterial, umfassend
ein Faser-Basismaterial,
ein Bindemittel,
ein abrasives Material, und
einen Reibungsmodifikator, **dadurch gekennzeichnet, dass**
der Reibungsmodifikator Silikonkautschukpartikel enthält, wobei ein Silankopplungsmittel innerhalb der Silikonkautschukpartikel dispergiert ist,
und wobei der durchschnittliche Teilchendurchmesser der Siliconkautschukteilchen zwischen 10 Mikrometer und 1000 Mikrometer liegt.

2. Das Reibungsmaterial nach Anspruch 1, wobei
die Siliconkautschukpartikel zwischen 0,1 Gew.-% und 5 Gew.-% des Silankopplungsmittels bezogen auf die gesamten Siliconkautschukpartikel enthalten.

3. Reibungsmaterial nach Anspruch 1 oder 2, wobei
das Reibungsmaterial zwischen 0,5 Volumen-% und 20 Volumen-% der Siliconkautschukpartikel bezogen auf das gesamte Reibungsmaterial enthält.

4. Reibungsmaterial nach einem der Ansprüche 1-3, wobei
das Reibungsmaterial als Schleifmaterial starre anorganische Partikel in einer Menge zwischen 0,1 Volumen-% und 20 Volumen-%, bezogen auf das gesamte Reibungsmaterial, enthält, wobei die starren anorganischen Partikel eine Mohs-Härte zwischen 5-9 und einen mittleren Teilchendurchmesser von 1-15 Mikrometern aufweisen.

## Revendications

1. Matériau de frottement comprenant :
un matériau de base fibreux,
un liant,
un matériau abrasif, et
un modificateur de frottement, **caractérisé en ce que** :
le modificateur de frottement comprend des particules de caoutchouc de silicone, dans lequel un agent de couplage en silane est dispersé à l'intérieur des particules de caoutchouc de silicone,
et dans lequel le diamètre moyen de particules des particules de caoutchouc de silicone est compris entre 10 micromètres et 1000 micromètres.

2. Matériau de frottement selon la revendication 1, dans lequel :
les particules de caoutchouc de silicone comprennent entre 0,1 % en poids et 5 % en poids de l'agent de couplage en silane par rapport à la totalité des particules de caoutchouc de silicone.

3. Matériau de frottement selon la revendication 1 ou 2, dans lequel :
le matériau de frottement comprend entre 0,5 % en volume et 20 % en volume des particules de caoutchouc de silicone par rapport à la totalité du matériau de frottement.

4. Matériau de frottement selon l'une quelconque des revendications 1 à 3, dans lequel :
le matériau de frottement comprend, en tant que matériau abrasif, des particules inorganiques rigides, en une quantité comprise entre 0,1 % en volume et 20 % en volume par rapport à la totalité du matériau de frottement, dans lequel les particules inorganiques rigides ont une dureté Moh comprise entre 5 et 9 et un diamètre moyen de particules de 1 à 15 micromètres.
